Europäisches Patentamt

European Patent Office

Office européen des brevets

(11) Veröffentlichungsnummer: **0 132 761**

**A2**

(12) **EUROPÄISCHE PATENTANMELDUNG**

(21) Anmeldenummer: **84108409.8**

(22) Anmeldetag: **17.07.84**

(51) Int. Cl.⁴: **F 02 K 1/12**

(30) Priorität: **29.07.83 DE 3327385**

(43) Veröffentlichungstag der Anmeldung:
**13.02.85 Patentblatt 85/7**

(84) Benannte Vertragsstaaten:
**FR GB**

(71) Anmelder: **DORNIER GMBH**
**Postfach 1420**
**D-7990 Friedrichshafen(DE)**

(72) Erfinder: **Oberdörffer, Elmar, Dipl.-Ing.**
**Echbeck 24**
**D-7799 Heiligenberg(DE)**

(74) Vertreter: **Landsmann, Ralf, Dipl.-Ing.**
**Kleeweg 3**
**D-7990 Friedrichshafen 1(DE)**

(54) **Strahlaustrittsdüse für Gasturbinentriebwerke.**

(57) Strahlaustrittsdüse für Gasturbinenstrahltriebwerke, Rafetentriebwerke oder dergleichen, welche Klappensysteme (6, 6') zur Konvergent-Divergenteinstellung des Düsenquerschnittes und zur Schubvektorsteuerung in einer Ebene besitzen und ferner Klappen (18, 18') zur Schubvektorsteuerung in einer zur ersten Ebene senkrechten Ebene.

FIG. 1

EP 0 132 761 A2

Reg. 2522


Strahlaustrittsdüse für Gasturbinentriebwerke


Die Erfindung betrifft Strahlaustrittsdüsen von Gasturbinentriebwerken, Raketentriebwerken oder dergleichen, die Mittel zur Führung und Ausrichtung des Treibgasstrahles zur Schubvektorsteuerung um die Nickachse eines Luftfahrzeuges oder anderer Fluggeräte aufweisen, wobei die Strahlausrichtmittel durch in eine Konvergent- bzw. Divergentstellung verschwenkbare Schaufelgruppen gebildet und wobei zu den Schaufeln senkrechte, seitliche Abschlusswände vorhanden sind.


Schubvektorsteuerungen der genannten Art dienen zur Erzeugung von Drehmomenten um die Roll-Nick- bzw. Gierachse, z. B. von Luftfahrzeugen durch Richtungsänderung des Schubes (Schubvektor) geeigneter Gasturbinentriebwerke.


Angewandt werden Schubvektorsteuerungen beispielsweise bei senkrecht startenden und landenden Flugzeugen, solange infolge zu geringer Vorwärtsgeschwindigkeit die aerodynamisch arbeitenden Steuerflächen nicht oder nicht in ausreichendem Masse wirksam sind.

Schubvektorsteuerungen können mittels schwenkbarer Austrittsdüsen oder schwenkbarer Strahlablenkklappen im Bereich der Strahlaustrittsöffnungen der Düsen arbeiten.

Es ist ferner eine Bauform für die Düsen von Strahlantrieben bekannt, bei der die inneren, in der Strömung des Gasstrahles liegenden Führungsflächen der Strahlaustrittsdüse durch schwenkbare Klappensysteme gebildet sind. Die Klappensysteme bestehen je aus zwei, die obere bzw. untere Strahlführungswand der Strahldüse bildenden gelenkig aneinander angeschlossenen und gemeinsam um eine feste Achse schwenkbaren Strahlführungsklappen. Die Schwenkachsen erstrecken sich in Richtung der Querachse des Triebwerkes bzw. des Fluggerätes. Mittels der um die festen Achsen schwenkbaren Klappen ist der engste Düsenquerschnitt einstellbar, während mittels der gelenkig anschliessenden hinteren Klappen der Düsenaustrittsquerschnitt und gleichzeitig die Richtung des Austrittes der Gasstrahlen in der Vertikalebene veränderbar ist. Senkrecht zu den Klappensystemen sind feststehende, die seitlichen Strahlführungswände bildende Abschlussplatten angeordnet.

Gegenüber dem Bekannten ist es Aufgabe der Erfindung, mit einfachen Mitteln Schubvektorsteuerungen der genannten Art mit einer Schubvektorsteuerung um die Nickachse so auszubilden, dass zusätzlich auch eine Schubvektorsteuerung um die Gierachse ermöglicht wird.

Die gestellte Aufgabe ist erfindungsgemäss dadurch gelöst, dass die hinteren Wandabschnitte der vertikal gerichteten seitlichen Strahlführung der Düse zur Schubvektorsteuerung um die Gierachse als Klappen ausgebildet und um Achsen senkrecht zu den Klappen für die Schubvektorsteuerung um die Nickachse schwenkbar angeordnet sind. Mittels der um vertikale Achsen schwenkbar angeordneten hinteren Abschnitte der zueinander parallel angeordneten seitlichen Begrenzungs- bzw. Abschlusswände ist der aus der Düse austretende Treibgasstrahl gleichzeitig oder getrennt von der Ablenkung in der Vertikalebene, in der dazu senkrechten Ebene (Gierebene) ablenkbar.

In der Zeichnung ist ein Ausführungsbeispiel gemäss der Erfindung dargestellt. Die gezeigte Ausführung ist nachfolgend näher beschrieben.

Es zeigen:

Fig. 1 in einem vertikalen Schnitt die Strahlaustrittsdüse eines Strahltriebwerkes und

Fig. 2 die Strahlaustrittsdüse in einem Querschnitt nach der Linie II-II der Fig. 1.

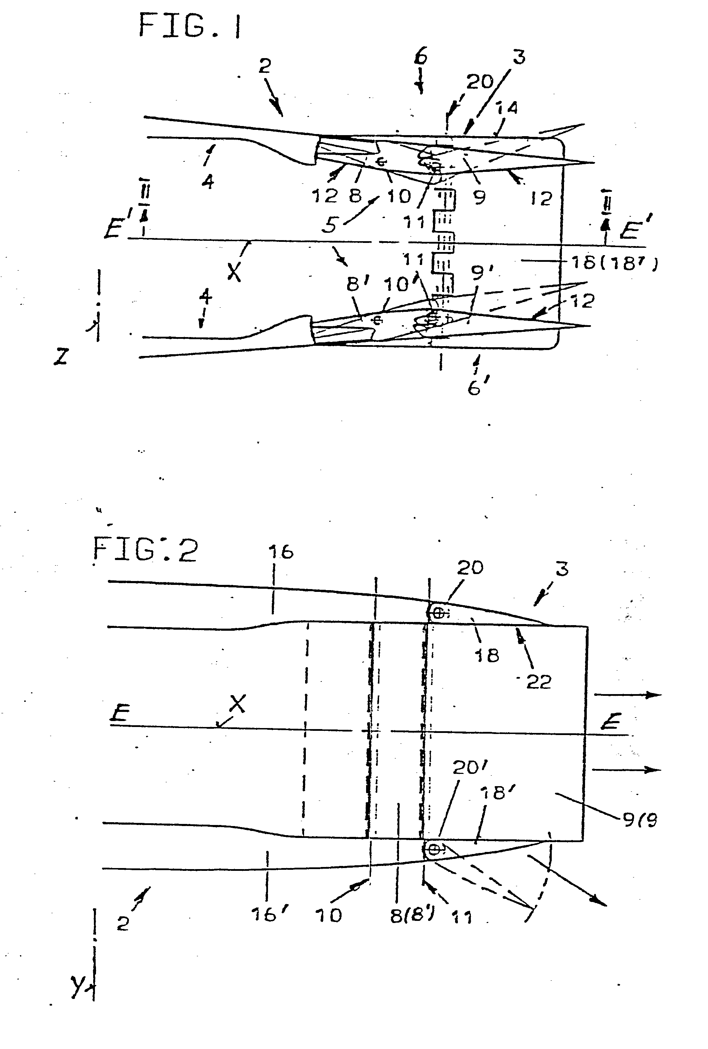

In der Zeichnung Fig. 1 und Fig. 2 ist mit 2 der hintere Abschnitt eines Strahltriebwerkes, z. B. zur Vortriebserzeugung für ein Luftfahrzeug und mit 3 dessen Strahlaustrittsdüse bezeichnet.

Die Strahlführung der Strahlaustrittsdüse 3 ist gebildet durch den an den Triebwerksausgang anschliessenden, rohrförmigen Innenwandabschnitt 4, der stromab in einen Abschnitt 5 mit rechteckigem Düsenquerschnitt übergeht, der horizontale und dazu vertikale Wandabschnitte aufweist. Die horizontalen Wandabschnitte werden in bekannter Weise gebildet durch zwei Klappensysteme 6 bzw. 6', bestehend aus je zwei aneinander anschliessende Klappen 8, 9 bzw. 8', 9'. Die stromab ersten Klappen 8 bzw. 8' sind um triebwerksfeste Achse 10 schwenkbar und nehmen an ihren stromab hinteren Enden die zweiten Klappen 9 bzw. 9' um Achsen 11 frei schwenkbar auf, wobei die zweiten Klappen 9, 9' mit ihren gegen die Strömung weisenden vorderen Enden an die ersten Klappen 8, 8' anschliessen. Infolge dieser Klappenanordnung bilden die einander gegenüberliegenden Strahlführungsflächen 12 der Klappen 8, 8' bzw. 9, 9' entsprechend der um die Achsen 10 bzw. 11 eingestellten Schwenklage einen konvergent-divergent oder einen nur konvergent verlaufenden Düsenquerschnitt, wobei der engste Düsenquerschnitt im Bereich der Schwenkachsen 11 bzw. am Ende der Klappen 9, 9' liegt.

Bei gleichsinniger Verstellung, insbesondere der zweiten Klappen 9, 9' bzw. einer der divergenten bzw. konvergenten Einstellage überlagerten, gleichsinnigen Verstellung, wird eine Schubvektorsteuerung um die Querachse Y bewirkt. Für die Klappensysteme 8, 8' bzw. 9, 9' ist ein hier nicht

0132761

dargestellter Stellantrieb vorgesehen, der innerhalb des äusseren Düsenmantels 14 untergebracht ist.

Zur Erzielung einer zur Schubvektorsteuerung in der Vertikalebene E-E des Triebwerkes bzw. des Fluggerätes zusätzlichen Steuerung mittels des Treibgasstrahles in der zur Ebene E-E senkrechten Ebene E'-E', sind die zu den Klappen 8, 8' bzw. 9, 9' senkrechten Strahlführungen durch an feststehenden Wandabschnitten 16, bzw. 16' über Achsen 20 angelenkte Klappen 18, 18' gebildet. Die festen Wandabschnitte 16, 16' schliessen an den Triebwerksausgang an und die Klappen 18, 18' sind mit ihrem der Anströmung zugewandten, vorderen Ende gelenkig an die feststehenden Wandabschnitte 16, 16' angeschlossen. Die Schwenkachsen 20 sind vorzugsweise im Bereich der Verbindung der Klappen 8, 9 bzw. 8', 9' angeordnet.

Die zur Schubvektorsteuerung um die Gierachse Z des Fluggerätes dienenden Klappen 18, 18' sind über ein hier nicht dargestelltes Getriebe aus ihrer zueinander parallelen Neutralstellung, in der sie mit ihren Strahlführungsflächen 22 eine ebene Fortsetzung der feststehend angeordneten Seitenwände 16, 16' bilden, wechselweise von der Vertikalebene E-E des Triebwerkes bzw. der Düse 3 weggerichtet verstellbar und bewirken in ihren Ausschlagstellungen eine Schubvektorsteuerung um die Gierachse Z. Die Verstellung der Klappen 18, 18' kann separat oder in Überlagerung mit einer Verstellung der Klappensysteme 6 bzw. 6' erfolgen.

Mit den Klappen 8, 8' bzw. 9, 9' kann somit durch eine Schwenkbewegung um die Achsen 10 bzw. 11 einerseits eine Veränderung des Düsenquerschnittes und andererseits durch gleichsinnige Verstellung der zweiten Klappen 9 bzw. 9' eine Änderung des Schubvektors bewirkt werden. Zudem lässt sich mit Hilfe der zusätzlichen Klappen 18, 18' der Schubvektor im Sinne der Erzeugung eines Giermomentes verändern, und zwar getrennt oder in Überlagerung mit einer Änderung im Sinne der Erzeugung eines Nickmomentes.

Die so erzeugten Momente können zur Unterstützung der Wirkung von aerodynamischen Ruderflächen bei hohen Anstellwinkeln oder geringen Staudrücken dienen.

Die Wirkung der seitlichen Klappen 18, 18' kann verstärkt werden, wenn zusätzlich zur Verschwenkung auch die zweiten Klappen 9 bzw. 9' der Klappensysteme 6 bzw. 6' in eine Stellung mit einer Verengung des Austrittsquerschnittes gebracht sind.

22. Juli 1983
Be/eh

DORNIER GMBH
7990 Friedrichshafen

0132761

−1−

Reg. 2522

Patentansprüche

1. Strahlaustrittsdüse für Gasturbinenstrahltriebwerke, Rake-tentriebwerke oder dergleichen, die Mittel zur Führung und Ausrichtung des Treibgasstrahles zur Schubvektorsteuerung um die Nickachse eines Luftfahrzeuges oder anderer Fluggeräte aufweisen, wobei die Strahlausrichtmittel durch in eine Konvergent-Divergentstellung verschwenkbare Schaufelgruppen gebildet und wobei zu den Schaufeln senkrechte, seitliche Abschlußwände vorhanden sind, dadurch gekennzeichnet, dass die hinteren Wandabschnitte (16, 16') der vertikal gerichteten seitlichen Strahlführungen der Düse (3) zur Schubvektorsteuerung um die Gierachse (Z) als Klappen (18, 18') ausgebildet und um Achsen (20) senkrecht zu den Klappen für die Schubvektorsteuerung um die Nickachse (Y) schwenkbar angeordnet sind.

2. Düse nach Anspruch 1, dadurch gekennzeichnet, dass die Schwenkachsen (20) der Klappen (18, 18') im unmittelbaren Bereich des engsten Düsenquerschnittes angeordnet sind.

− 2 −

3. Düse nach Anspruch 1 oder 2, dadurch gekennzeichnet,
   dass die Klappen (18 bzw. 18') über ein Getriebe
   wechselweise betätigbar sind.

22. Juli 1983
Be/eh

FIG. 1

FIG. 2